# EUROPÄISCHE PATENTSCHRIFT

(11) **EP 1 936 091 B1**
(45) Veröffentlichungstag und Bekanntmachung des Hinweises auf die Patenterteilung: **13.04.2016**
(21) Anmeldenummer: 07123527.9
(22) Anmeldetag: 19.12.2007
(51) Int. Cl.: E05F 15/611, E05F 15/70

(54) **Tür- oder Fensterantrieb**
Door or window actuator
Actionneur de porte ou de fenêtre

(30) Priorität: 22.12.2006 DE 102006062333
(43) Veröffentlichungstag der Anmeldung: 25.06.2008
(73) Patentinhaber: GEZE GmbH, 71229 Leonberg (DE)
(72) Erfinder: Habicht, Olaf, 8413, Neftenbach (CH); Buk, Peter, 70199, Stuttgart (DE)

(56) Entgegenhaltungen:
- EP-A1- 1 412 603
- WO-A1-01/11173
- WO-A1-2006/013089
- DE-A1- 3 150 693
- DE-A1- 10 207 319
- DE-A1- 19 648 435
- US-A- 5 913 763
- US-A1- 2002 053 903
- US-B1- 6 581 480

## Beschreibung

Die Erfindung betrifft einen Tür- oder Fensterantrieb nach dem Oberbegriff des Patentanspruchs 1.

Aus der DE 102 07 319 A1 ist ein Tür- oder Fensterantrieb mit einer Antriebseinrichtung bekannt, mit mindestens einem beweglichen, kraftbeaufschlagten Bauteil, und mit mindestens einer Erfassungseinrichtung zur Erfassung der Bewegung des beweglichen, kraftbeaufschlagten Bauteils der Antriebseinrichtung, wobei die Erfassungseinrichtung mindestens eine Magnetfelder erfassende Sensoreinrichtung aufweist, und wobei die Sensoreinrichtung mit dem mindestens einen beweglichen, kraftbeaufschlagten Bauteil der Antriebseinrichtung zusammenwirkt. Das bewegliche, kraftbeaufschlagte Bauteil der Antriebseinrichtung weist zumindest abschnittsweise eine Magnetisierung auf. Es ist eine Auswerteeinrichtung vorhanden, welche das Ausgangssignal der Sensoreinrichtung in eine Messgröße umrechnet. Konkret wird die Drehgeschwindigkeit des beweglichen, kraftbeaufschlagten Bauteils erfasst; weitere Messgrößen werden nicht ermittelt.

Aus der DE 42 00 972 C2 ist ein Tür- oder Fensterantrieb mit einer Antriebseinrichtung bekannt. Die Antriebseinrichtung weist mindestens ein bewegliches Bauteile auf. Eine Erfassungseinrichtung dient zur Erfassung der Geschwindigkeit und/oder Position des beweglichen Bauteils der Antriebseinrichtung, hier konkret der Motorwelle des Antriebsmotors, wobei die Erfassungseinrichtung eine Magnetfelder erfassende Sensoreinrichtung aufweist. Die Sensoreinrichtung wirkt mit mindestens dem beweglichen Bauteil der Antriebseinrichtung zusammen, indem die Sensoreinrichtung zwei Hallgeneratoren umfasst, welche das Magnetfeld eines auf der Motorwelle des Antriebsmotors angeordneten Ringmagneten erfassen. Diese separate Anordnung des Ringmagneten beansprucht Platz innerhalb der Antriebseinrichtung und bedeutet einen zusätzlichen Montageschritt.

Aus der EP 1 412 603 A1 ist eine Getriebe-Antriebseinheit mit Drehzahlerfassung bekannt. Ein separates, d.h. nicht zur Kraftübertragung dienendes Sensorrad ist mit einem Magneten versehen, welcher zur Bestimmung der Drehgeschwindigkeit durch eine Sensorik abgetastet wird.

Aus der WO 01 / 11 173 A1 ist ein axialer Türantrieb bekannt. Auf der Motorwelle ist ein separates, als kreisförmiges Glied bezeichnetes Sensorrad montiert, welches zur Bestimmung der Drehgeschwindigkeit von einem Halleffekt-Sensor abgetastet wird.

Aus der DE 196 48 435 A1 ist ein Türantrieb bekannt. Ein linear verschiebbares Bauteil weist eine Magnetisierung auf, welche zur Erfassung der Schubbewegung durch einen Sensor abgetastet wird.

Aus der DE 31 50 693 A1 ist eine Einklemmsicherung für automatisch bewegte Türen bekannt. Als Kraftmessvorrichtung dient ein Dehnungsmessstreifen, der an einem der Glieder des die Tür bewegenden Hebelgestänges angeordnet ist. Diese Anordnung erlaubt zwar naturgemäß die Erfassung von Verformungen, ist durch die Notwendigkeit des elektrischen Anschlusses des Dehnungsmessstreifens jedoch aufwändig.

Aus der US 5,913,763 ist ein Verfahren zur Steuerung der Betriebsarten einer Türanlage in Verbindung mit einem elektromechanischen Türantrieb bekannt. Beschrieben wird eine Ansteuerung des Antriebs durch manuelle Bewegung des angeschlossenen Türflügels, wobei die hierdurch ausgelöste Drehung der Motor-welle durch einen darauf montierten Drehgeber erfasst wird.

Aus der US 2002/053903 A1 ist eine Winkelmesseinrichtung zur berührungslosen Erfassung des absoluten Drehwinkels einer Welle, insbesondere einer Lenksäule, bei Mehrfachumdrehungen bekannt, bei welcher an der Welle oder einem mit ihr verbundenen Teil magnetische, optische oder magneto-optische Strukturen angeordnet sind, wobei die Welle ein Gewinde trägt, welches mit einem in Achsrichtung der Welle verschiebbaren Reiter in Eingriff steht, und wenigstens ein Sensor zur Erfassung der magnetischen, optischen oder magneto-optischen Strukturen sowie der Verschiebelage des Reiters vorgesehen ist.

Der Erfindung liegt die Aufgabe zugrunde, einen Tür- oder Fensterantrieb mit einer einfach aufgebauten und montagefreundlichen Erfassungseinrichtung zu schaffen.

Die Aufgabe wird durch die Merkmale des Patentanspruchs 1 gelöst.

Die Unteransprüche bilden vorteilhafte Ausgestaltungsmöglichkeiten der Erfindung.

Dadurch, dass das bewegliche, kraftbeaufschlagten Bauteil der Antriebseinrichtung abschnittsweise eine Magnetisierung aufweist, wird eine einfach aufgebaute und montagefreundliche Erfassungseinrichtung erreicht. Durch die direkte Abtastung des magnetisierten, beweglichen Bauteils werden durch Wegfall der zusätzlichen

Magnete sowohl Platz als auch Montageaufwand gespart. Die Erfassungseinrichtung funktioniert zuverlässig auch bei innerhalb der Antriebseinrichtung auftretender Verschmutzung.

Kraftbeaufschlagte Bauteile der Antriebseinrichtung Können bei Betastung einer elastischen Verformung unterliegen, welche sich durch Torsion und/oder Biegung äußert. Diese Formänderungen sind durch die Erfassungseinrichtung direkt messbar und zur Ermittlung weiterer Messgrößen der Antriebseinrichtung, z.B. Dreh- und/oder Biegemomente, geeignet.

Die Auswerteeinrichtung rechnet das Ausgangssignal der Sensoreinrichtung in eine Messgröße um Als bewegliches, kraftbeaufschlagtes Bauteil der Antriebseinrichtung ist mindestens ein Abtriebsglied und/oder ein Antriebsmotor mit einer Motorwelle und/oder eine Getriebewelle eines zwischen einem Antriebsmotor und dem Abtriebsglied geschalteten Getriebes vorhanden. Mittels der Auswerteeinrichtung ist die Verformung eines beweglichen Bauteils der Antriebseinrichtung und verschiedene Messgrößen der Antriebseinrichtung bestimmbar, z.B. die Geschwindigkeit und/oder die Drehzahl und/oder die Position.

Eine besonders hohe Messgenauigkeit wird erreicht, indem mehrere bewegliche Bauteile der Antriebseinrichtung jeweils abschnittsweise eine Magnetisierung aufweisen und mehrere Sensoreinrichtungen vorhanden sind, welche jeweils die Magnetisierung eines beweglichen Bauteils erfassen. Aus den separat ermittelten Messgrößen ist dann der Messwert interpolierbar.

Durch die von der Sensoreinrichtung erfasste Lageveränderung des magnetisierten Bauteils können Positions- und/oder Geschwindigkeitswerte von Bauteilen der Antriebseinrichtung sowie des angeschlossenen Türflügels bestimmt werden.

Durch die Möglichkeit zur Momentenerfassung wird auch die Sicherheit des Tür- oder Fensterantriebs erhöht, denn das an dem Abtriebsglied, welches mit dem angeschlossenen Tür- oder Fensterflügel in Wirkverbindung steht, gemessene Moment kann zur Beurteilung einer hindernisfreien Bewegung des Tür- oder Fensterflügels herangezogen werden. D.h. wenn das gemessene Moment einen speicherbaren Grenzwert überschreitet, wird dies als Einklemmsituation erkannt und eine entsprechende Sicherheitsreaktion des Tür- oder Fensterantriebs veranlasst. Diese Art der Hinderniserkennung kann alternativ oder zusätzlich zu anderen Arten der Hinderniserkennung (Berechnung des Moments aus dem Motorstrom und/oder Erfassung der Drehzahl über Drehgeber) eingesetzt werden. Bei zusätzlichem Einsatz ergibt sich somit eine die Sicherheit erhöhende Redundanz der Hinderniserkennung.

Neben der vorangehend beschriebenen Hinderniserkennung eignet sich die durch die Sensoreinrichtung ermöglichte Momentenerfassung auch zu Ansteuerung der Antriebseinrichtung bei manueller Betätigung des angeschlossenen Türflügels (sogenannte "Push-and-Go"-Funktion). Bei herkömmlichen Antriebseinrichtungen mit dieser Funktionsart wird die manuelle Betätigung des angeschlossenen Flügels über den Drehgeber (motorseitig) oder über mit dem Abtriebsglied zusammenwirkende, mechanische Schalter erfasst. Durch das Getriebespiel oder anderen Totgang wird die manuelle Betätigung des angeschlossenen Flügels erst dann erkannt, wenn dieser schon manuell um einen bestimmten Winkelbereich geöffnet ist, woraufhin die Wirkung der Antriebseinrichtung dann schlagartig einsetzt. Dahingegen bietet die erfindungsgemäße Erfassungseinrichtung die Möglichkeit, eine auf den angeschlossenen Türflügel manuell im Öffnungssinn aufgebrachte Kraft sofort zu erkennen, insbesondere bei Magnetisierung und sensorischer Erfassung des Abtriebsglieds, und den Antrieb daraufhin unverzüglich in Betrieb zu setzen, so dass der beim Stand der Technik vorhandene, lästige Totgang entfällt.

Auch die Realisierung einer sogenannten "Servo"-Funktion, d.h. die Unterstützung der manuellen Betätigung des Flügels durch die Antriebseinrichtung, kann durch die erfindungsgemäße Erfassungseinrichtung optimiert werden. Durch die Möglichkeit zur exakten Erfassung des in einem beweglichen, eine erfassbare Magnetisierung aufweisenden Bauteil der Antriebseinrichtung, vorteilhafterweise in dem Abtriebsglied vorliegenden Moments ist ein optimal an dieses Moment angepasster Betrieb der Antriebseinrichtung möglich, d.h. die Antriebseinrichtung kann abhängig von dem momentan in dem beweglichen Bauteil (Abtriebsglied) vorliegenden und erfassten Moment geregelt betrieben werden, so dass nahezu kein Kraftaufwand zum manuellen Betätigen des angeschlossenen Türflügels erforderlich ist.

Neben der bereits genannten Motorwelle und dem ebenfalls bereits genannten Abtriebsglied und der Getriebewelle, können in gleicher Weise auch weitere Getriebekomponenten wie Zahnräder oder Schnecken eine durch die Sensoreinrichtung erfassbare Magnetisierung aufweisen.

Außerdem sind auch linear verschiebbare Bauteile der Antriebseinrichtung, z.B. der Kolben eines elektrohydraulischen Drehtürantriebs, bei geeigneter Materialauswahl magnetisierbar und deren Bewegung durch eine Sensoreinrichtung erfassbar.

Bei Tür- oder Fensterantrieben, deren Antriebseinrichtung eine feste Kopplung zwischen dem Antriebsmotor und dem Abtriebsglied aufweist, z.B. bei elektromechanischen Drehtürantrieben, ist prinzipiell die Erfassung eines einzigen magnetisierten Bauteils der Antriebseinrichtung durch eine einzige Sensoreinrichtung ausreichend, um aus den hier erfassten Messwerten die Bewegung anderer beweglicher Bauteile der Antriebseinrichtung herzuleiten.

Dagegen ist bei Tür- oder Fensterantrieben, deren Antriebsmotor lösbar und/oder über einen Hydraulikkreislauf mit dem Abtriebsglied der Antriebseinrichtung verbunden ist, z.B. bei elektrohydraulischen Drehtürantrieben, die sensorische Erfassung mehrerer magnetisierter Bauteile der Antriebseinrichtung sinnvoll, z.B. an der Motorwelle des Antriebsmotors und zusätzlich am Abtriebsglied der Antriebseinrichtung. Auf diese Weise lassen sich sowohl die Flügeistellung als auch die Betriebskenngrößen des Antriebsmotors und/oder mit dem Antriebsmotor getriebemäßig gekoppelter Bauteile erfassen.

Ein weiteres Anwendungsgebiet ergibt sich bei zweiflügeligen Drehtüranlagen mit Regelung der Schließfolge, wobei mindestens ein magnetisiertes Bauteil mit mindestens einer Sensoreinrichtung im Bereich des Standflügelantriebs oder einem mit diesem bewegungsverbundenen Teil angeordnet ist und der Gangflügelantrieb abhängig von dem Signal dieser Sensoreinrichtung, welche ein die Stellung des Standflügels anzeigendes Signal abgibt, betreibbar ist.

Neben Schwenkflügelantrieben (Drehtüren, Fenster) können alternativ auch Antriebe von Flügeln anderer Bewegungsarten (Schiebetüren und -fenster, Falttüren, Karusselltüren) mit der erfindungsgemäßen Sensoreinrichtung ausgestattet werden.

Im Nachfolgenden wird ein Ausführungsbeispiel in der Zeichnung anhand der Figuren näher erläutert.

Dabei zeigen:
- **Fig. 1**: einen erfindungsgemäßen, als Drehtürantrieb ausgebildeten Tür- oder Fensterantrieb in Frontansicht;
- **Fig. 2**: eine schematische Darstellung der wesentlichen Bauteile des Antriebs;
- **Fig. 3**: eine der Fig. 2 entsprechende, um 90° gedrehte Ansicht mit beispielhafter Darstellung der Einbaupositionen .

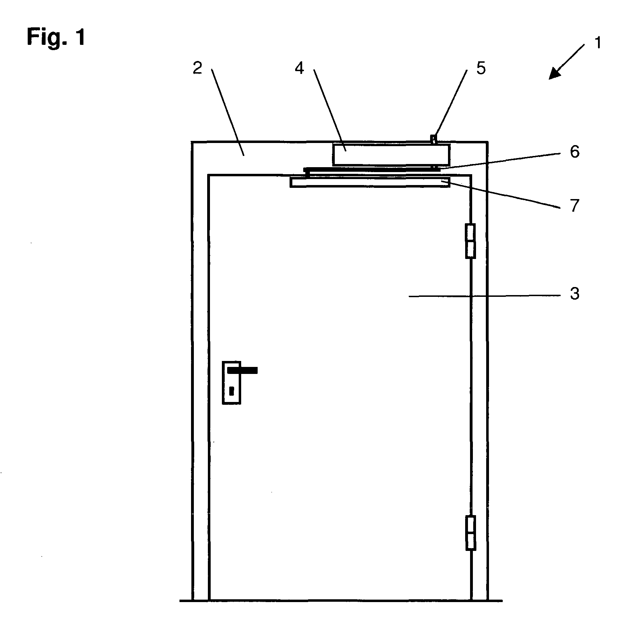

In der **Fig. 1** ist eine automatische Türanlage mit einem als Drehflügel ausgebildeten Türflügel 3 dargestellt. Der Türflügel 3, welcher über Scharniere drehbar an einer ortsfesten Zarge 2 gelagert ist, ist über ein als Gleitarm 6 ausgebildetes, mit dem Abtriebsglied 5 einer ortsfest angeordneten Antriebseinrichtung 4 verbundenes Gestänge und eine Gleitschiene 7 antreibbar, z.B. angesteuert durch einen (nicht dargestellten) Sensor, der eine sich annähernde und/oder sich im Bereich der Türanlage befindende Person erfasst.

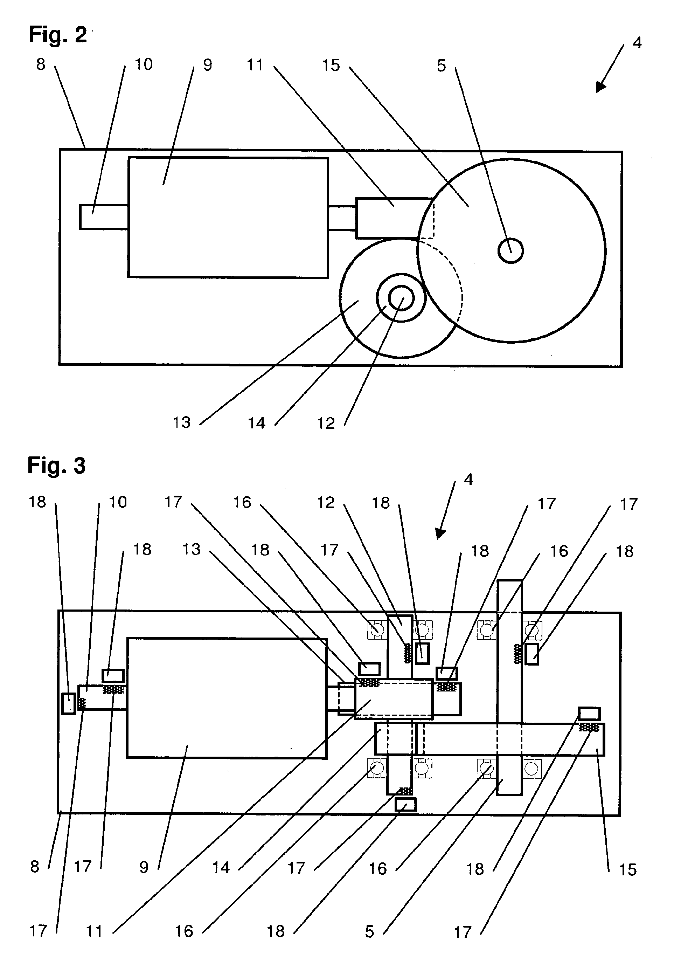

In der **Fig. 2** sind die wesentlichen, innerhalb des Gehäuses 8 der Antriebseinrichtung 4 angeordneten Bauteile schematisch dargestellt. Der Antriebsmotor 9 trägt auf seiner Motorwelle 10 eine Schnecke 11, welche mit dem auf einer Getriebewelle 12 eines zwischengeschalteten Getriebes gelagerten, ersten Zahnrad 13 kämmt. Ebenfalls auf der Getriebewelle 12 ist - drehfest mit dem ersten Zahnrad 13 verbunden - ein zweites Zahnrad 14 gelagert, welches mit einem drehfest auf dem als Abtriebswelle ausgebildeten Abtriebsglied 5 angeordneten, dritten Zahnrad 15 kämmt. Eine Drehbewegung der Motorwelle 10 des Antriebsmotors 9 wird somit über das Getriebe in eine Drehbewegung des Abtriebsglieds 5 umgesetzt.

In der **Fig. 3** ist die Anordnung gemäß **Fig. 2** um 90° gekippt dargestellt, um die möglichen Einbaupositionen der Sensoreinrichtung 18 zu verdeutlichen. In der Zeichnung links dargestellt ist eine partielle Magnetisierung 17 der Motorwelle 10, welche von einer stirnseitig oder tangential zur Motorwelle 10 angeordneten Sensoreinrichtung erfassbar ist. Ein weiteres zur Magnetisierung 17 geeignetes Bauteil ist die auf der Motorwelle 10 angeordnete Schnecke 11. Das mit der Schnecke 11 zusammenwirkende Zahnrad 13 kann ebenso eine Magnetisierung 17 aufweisen, wie die dieses Zahnrad 13 tragende Getriebewelle 12, wobei auch hier ein stirnseitiger und/oder tangentialer Abgriff durch die Sensoreinrichtung 18 möglich ist. Weitere zur Magnetisierung 17 geeignete Bauteile der Antriebseinrichtung. 4 sind - in der Zeichnung rechts dargestellt - das auf dem Abtriebsglied 5 angeordnete Zahnrad 15 sowie das Abtriebsglied 5 selbst, wobei auch hier ein stirnseitiger und/oder tangentialer Abgriff durch die Sensoreinrichtung 18 möglich ist.

Die Sensoreinrichtung 18 kann durch das Abtasten der Magnetisierung 17 sowohl eine Lageveränderung als auch eine Verformung der magnetisierten Bauteile erfassen, wodurch sowohl Geschwindigkeiten als auch Momente ermittelbar sind.

Die in der **Fig. 3** dargestellten Magnetisierungen 17 und Einbaupositionen der Sensoreinrichtung(en) 18 sind rein beispielhaft. Prinzipiell lassen sich bei geeigneter Materialauswahl alle beweglichen Bauteile der Antriebseinrichtung 4 mit einer durch eine Sensoreinrichtung 18 erfassbaren Magnetisierung 17 versehen.

Prinzipiell reichen zwar eine einzige Magnetisierung 17 und eine einzige Sensoreinrichtung 18 aus, um aus den hier erfassten Messwerten die Bewegung anderer beweglicher Bauteile der Antriebseinrichtung 4 sowie des angeschlossenen Türflügels 3 herzuleiten. Zur Erreichung einer hohen Messgenauigkeit und/oder Fehlersicherheit bzw. bei Antriebseinrichtungen 4 mit nichtfester Kopplung zwischen Motorwelle 10 und Abtriebsglied 5 (z.B. bei elektrohydraulischen Drehtürantrieben) ist die Magnetisierung 17 mehrerer beweglicher Bauteile der Antriebseinrichtung 4 und deren Abtastung durch separate Sensoreinrichtungen 18 sinnvoll.

### Liste der Referenzzeichen

- 1: Tür- oder Fensterantrieb
- 2: Zarge
- 3: Türflügel
- 4: Antriebseinrichtung
- 5: Abtriebswelle
- 6: Gestänge
- 7: Gleitschiene
- 8: Gehäuse
- 9: Antriebsmotor
- 10: Motorwelle
- 11: Schnecke
- 12: Getriebewelle
- 13: Zahnrad
- 14: Zahnrad
- 15: Zahnrad
- 16: Lager
- 17: Magnetisierung
- 18: Sensoreinrichtung

## Patentansprüche

1. Tür- oder Fensterantrieb (1) mit
einer Antriebseinrichtung (4) mit mindestens einem beweglichen, kraftbeaufschlagten Bauteil (5, 10, 12),
wobei das bewegliche, kraftbeaufschlagte Bauteil (5, 10, 12) der Antriebseinrichtung (4) abschnittsweise eine Magnetisierung (17) aufweist;
mit mindestens einer Erfassungseinrichtung zur Erfassung der Bewegung des beweglichen, kraftbeaufschlagten Bauteils (5, 10, 12) der Antriebseinrichtung (4);
wobei die Erfassungseinrichtung mindestens eine Magnetfelder erfassende Sensoreinrichtung (18) aufweist;
wobei die Sensoreinrichtung (18) mit dem mindestens einen beweglichen, kraftbeaufschlagten Bauteil (5, 10, 12) der Antriebseinrichtung (4) zusammenwirkt,
wobei eine Auswerteeinrichtung vorhanden ist, welche das Ausgangssignal der Sensoreinrichtung (18) in eine Messgröße umrechnet,
wobei mittels der Auswerteeinrichtung eine Verformung des beweglichen, kraftbeaufschlagten Bauteils (5, 10, 12) der Antriebseinrichtung (4) bestimmbar ist und
wobei als bewegliches, kraftbeaufschlagtes Bauteil der Antriebseinrichtung (4) mindestens ein Abtriebsglied (5) und/oder ein Antriebsmotor mit einer Motorwelle (10) und/oder eine Getriebewelle (12) eines zwischen einem Antriebsmotor (9) und dem Abtriebsglied (5) geschalteten Getriebes vorhanden ist,
wobei mehrere bewegliche, kraftbeaufschlagte Bauteile (5, 10, 12) der Antriebseinrichtung (4) jeweils abschnittsweise eine Magnetisierung (17) aufweisen, **dadurch gekennzeichnet, dass** mehrere Sensoreinrichtungen (18) vorhanden sind, welche jeweils die Magnetisierung eines beweglichen, kraftbeaufschlagten Bauteils (5, 10, 12) erfassen.

2. Tür- oder Fensterantrieb nach Anspruch 1,
**dadurch gekennzeichnet, dass**
das bewegliche, kraftbeaufschlagte Bauteil (5, 10, 12) der Antriebseinrichtung (4) rotatorisch bewegbar ist.

3. Tür- oder Fensterantrieb nach Anspruch 1,
**dadurch gekennzeichnet, dass**
das bewegliche, kraftbeaufschlagte Bauteil (5, 10, 12) der Antriebseinrichtung (4) linear bewegbar ist.

4. Tür- oder Fensterantrieb nach Anspruch 1,
**dadurch gekennzeichnet, dass**
mittels der Auswerteeinrichtung die Geschwindigkeit des beweglichen, kraftbeaufschlagten Bauteils (5, 10, 12) der Antriebseinrichtung (4) bestimmbar ist.

5. Tür- oder Fensterantrieb nach Anspruch 1,
**dadurch gekennzeichnet, dass**
mittels der Auswerteeinrichtung die Drehzahl des beweglichen, kraftbeaufschlagten Bauteils (5, 10, 12) der Antriebseinrichtung (4) bestimmbar ist.

6. Tür- oder Fensterantrieb nach Anspruch 1,
**dadurch gekennzeichnet, dass**
mittels der Auswerteeinrichtung die Position des beweglichen, kraftbeaufschlagten Bauteils (5, 10, 12) der Antriebseinrichtung (4) bestimmbar ist.

7. Tür- oder Fensterantrieb nach Anspruch 1,
**dadurch gekennzeichnet, dass**
das Ausgangssignal der Sensoreinrichtung (18) zur Erkennung eines Hinderniskontakts eines durch die Antriebseinrichtung (4) betätigbaren Tür- oder Fensterflügels (3) herangezogen wird.

8. Tür- oder Fensterantrieb nach Anspruch 1,
**dadurch gekennzeichnet, dass**
das Ausgangssignal der Sensoreinrichtung (18) zur Erkennung einer manuellen Betätigung eines durch die Antriebseinrichtung (4) betätigbaren Tür- oder Fensterflügels (3) herangezogen wird.

9. Tür- oder Fensterantrieb nach Anspruch 8,
**dadurch gekennzeichnet, dass**
die Antriebseinrichtung (4) in einer sogenannten "Push-and-Go"-Betriebsart betätigbar ist, d.h. dass die Antriebseinrichtung (4) durch eine manuelle Betätigung des Tür- oder Fensterflügels (3) im Öffnungssinne ansteuerbar ist.

10. Tür- oder Fensterantrieb nach Anspruch 8,
**dadurch gekennzeichnet, dass**
die Antriebseinrichtung (4) in einer sogenannten "Servo"-Betriebsart betätigbar ist, d.h. dass eine manuelle Betätigung des Tür- oder Fensterflügels (3) im Öffnungssinne durch die Antriebseinrichtung (4) unterstützbar ist.

## Claims

1. Door or window actuator (1) having
a drive device (4) with at least one moveable component (5, 10, 12), to which force is applied,
wherein the moveable component (5, 10, 12), to which force is applied, of the drive device (4) has magnetization (17) in certain sections;
having at least one sensing device for sensing the movement of the moveable component (5, 10, 12), to which force is applied, of the drive device (4);
wherein the sensing device has at least one sensor device (18) which senses magnetic fields;
wherein the sensor device (18) interacts with the at least one moveable component (5, 10, 12), to which force is applied, of the drive device (4),
wherein an evaluation device is present which converts the output signal of the sensor device (18) into a measurement variable,
wherein deformation of the moveable component (5, 10, 12), to which force is applied, of the drive device (4) can be determined by means of the evaluation device, and
wherein at least one output element (5) and/or a drive motor with a motor shaft (10) and/or a transmission shaft (12) of a transmission which is connected between a drive motor (9) and the output element (5) is present as a moveable component, to which force is applied, of the drive device (4),
wherein a plurality of moveable components (5, 10, 12), to which force is applied, of the drive device (4) each have magnetization (17) in sections, **characterized in that** a plurality of sensor devices (18) are present which each sense the magnetization of a moveable component (5, 10, 12) to which force is applied.

2. Door or window actuator according to Claim 1, **characterized in that**
the moveable component (5, 10, 12), to which force is applied, of the drive device (4) can be moved rotationally.

3. Door or window actuator according to Claim 1, **characterized in that**
the moveable component (5, 10, 12), to which force is applied, of the drive device (4) can be moved linearly.

4. Door or window actuator according to Claim 1, **characterized in that**
the speed of the moveable component (5, 10, 12), to which force is applied, of the drive device (4) can be determined by means of the evaluation device.

5. Door or window actuator according to Claim 1, **characterized in that**
the rotational speed of the moveable component (5, 10, 12), to which force is applied, of the drive device (4) can be determined by means of the evaluation device.

6. Door or window actuator according to Claim 1, **characterized in that**
the position of the moveable component (5, 10, 12), to which force is applied, of the drive device (4) can be determined by means of the evaluation device.

7. Door or window actuator according to Claim 1, **characterized in that**
the output signal of the sensor device (18) is used to detect contact with an obstacle by a door wing or window wing (3) which can be actuated by the drive device (4).

8. Door or window actuator according to Claim 1, **characterized in that**
the output signal of the sensor device (18) is used to detect manual activation of a door wing or window wing (3) which can be activated by the drive device (4).

9. Door or window actuator according to Claim 8, **characterized in that**
the drive device (4) can be activated in what is referred to as a "push-and-go" operating mode, i.e. **in that** the drive device (4) can be actuated by manual activation of the door wing or window wing (3) in the sense of opening.

10. Door or window actuator according to Claim 8, **characterized in that**
the drive device (4) can be activated in what is referred to as a "servo" operating mode, i.e. **in that** manual activation of the door wing or window wing (3) in the sense of opening can be assisted by means of the drive device (4).

## Revendications

1. Système d'actionnement de porte ou de fenêtre (1) comportant :
un dispositif d'actionnement (4) comportant au moins un composant mobile soumis à une force (5, 10, 12),
dans lequel le composant mobile soumis à une force (5, 10, 12) du dispositif d'actionnement (4) comprend une magnétisation (17) par endroits ;
comportant au moins un dispositif de détection destiné à détecter le mouvement du composant mobile soumis à une force (5, 10, 12) du dispositif d'actionnement (4) ;
dans lequel le dispositif de détection comprend au moins un dispositif à capteur (18) détectant des champs magnétiques ;
dans lequel le dispositif à capteur (18) coopère avec l'au moins un composant mobile soumis à une force (5, 10, 12) du dispositif d'actionnement (4),
dans lequel il est prévu un dispositif d'évaluation qui convertit le signal de sortie du dispositif de capteur (18) en une variable de mesure,
dans lequel une déformation du composant mobile soumis à une force (5, 10, 12) du dispositif d'actionnement (4) est déterminée au moyen du dispositif d'évaluation et
dans lequel il est prévu, en tant que composant mobile soumis à une force du dispositif d'actionnement (4), au moins un organe entraîné (5) et/ou au moins un moteur d'actionnement comportant un arbre moteur (10) et/ou un arbre de transmission (12) d'une transmission introduite entre un moteur d'actionnement (9) et l'organe entraîné (5), dans lequel de multiples composants mobiles soumis à une force (5, 10, 12) du dispositif d'actionnement (4) présentent respectivement par endroits une magnétisation (17), **caractérisé en ce qu'**il est prévu de multiples dispositifs à capteurs (18) qui détectent respectivement la magnétisation d'un composant mobile soumis à une force (5, 10, 12).

2. Système d'actionnement de porte ou de fenêtre selon la revendication 1, **caractérisé en ce que** le composant mobile soumis à une force (5, 10, 12) du dispositif d'actionnement (4) est mobile en rotation.

3. Système d'actionnement de porte ou de fenêtre selon la revendication 1,
**caractérisé en ce que** le composant mobile soumis à une force (5, 10, 12) du dispositif d'actionnement (4) est mobile linéairement.

4. Système d'actionnement de porte ou de fenêtre selon la revendication 1,
**caractérisé en ce que** la vitesse du composant mobile soumis à une force (5, 10, 12) du dispositif d'actionnement (4) peut être déterminée au moyen du dispositif d'évaluation.

5. Système d'actionnement de porte ou de fenêtre selon la revendication 1,
**caractérisé en ce que** la vitesse de rotation du composant mobile soumis à une force (5, 10, 12) du dispositif d'actionnement (4) peut être déterminée au moyen du dispositif d'évaluation.

6. Système d'actionnement de porte ou de fenêtre selon la revendication 1,
**caractérisé en ce que** la position du composant mobile soumis à une force (5, 10, 12) du dispositif d'actionnement (4) peut être déterminée au moyen du dispositif d'évaluation.

7. Système d'actionnement de porte ou de fenêtre selon la revendication 1,
**caractérisé en ce que** le signal de sortie du dispositif à capteur (18) est pris en compte pour détecter un contact avec un obstacle d'un battant de porte ou de fenêtre (3) pouvant être actionné par le dispositif d'actionnement (4).

8. Système d'actionnement de porte ou de fenêtre selon la revendication 1,
**caractérisé en ce que** le signal de sortie du dispositif à capteur (18) est pris en compte pour détecter un actionnement manuel d'un battant de porte ou de fenêtre (3) pouvant être actionné par le dispositif d'actionnement (4).

9. Système d'actionnement de porte ou de fenêtre selon la revendication 8,
**caractérisé en ce que** le dispositif d'actionnement (4) peut être actionné conformément à un mode d'entraînement dit "push and go", c'est-à-dire que le dispositif d'actionnement (4) peut être commandé dans le sens de l'ouverture par un actionnement manuel du battant de porte ou de fenêtre (3).

10. Système d'actionnement de porte ou de fenêtre selon la revendication 8,
**caractérisé en ce que** le dispositif d'actionnement (4) peut être actionné conformément à un mode d'entraînement dit "asservi", c'est-à-dire qu'un actionnement manuel du battant de porte ou de fenêtre (3) dans le sens de l'ouverture peut être assisté par le dispositif d'actionnement (4).
